# EUROPEAN PATENT SPECIFICATION

(11) **EP 0 609 983 B1**
(45) Date of publication and mention of the grant of the patent: **25.03.1998**
(21) Application number: 94300210.5
(22) Date of filing: 12.01.1994
(51) Int. Cl.: C08L 3/02, C08K 5/05

(54) **Starch based material**
Zusammensetzung auf Basis von Stärke
Composition à base d'amidon

(30) Priority: 05.02.1993 GB 9302259
(43) Date of publication of application: 10.08.1994
(73) Proprietor: CERESTAR HOLDING BV, NL-4550 AA Sas Van Gent (NL)
(72) Inventor: De Bock, Ingrid Lydia Helena Agnes, B-1785 Merchtem (BE); Bahr, Karl-Heinz, Dr., B-1850 Grimbergen (BE)
(74) Representative: Wilkinson, Stephen John

(56) References cited:
- EP-A- 0 106 763
- EP-A- 0 400 484
- EP-A- 0 497 706
- EP-A- 0 536 679
- DE-A- 2 552 126
- GB-A- 1 353 659
- US-A- 4 271 197
- US-A- 4 600 439
- US-A- 4 956 404

## Description

The present invention relates to a starch based material which has particular utility in the production of shaped, biodegradable articles.

In recent years a growing interest has developed in replacing disposable articles made from non-biodegradable materials with biodegradable equivalents. Starch is a substance which has attracted particular attention as a biodegradable replacement especially as a replacement for synthetic polymeric materials in packaging and similar applications which have an inherent waste disposal problem.

As long as the early 1970s the concept of using starch as the basis of a biodegradable article such as a wrapping film was disclosed in a series of UK patents namely 1 485 833, 1 487 050, 1 524 821, 1 592 062, 1 600 496, 1 600 497 and 2 029 836. These patents also describe the use of mixtures of starch with a thermoplastic polymer and the formation of shaped articles from starch or a mixture of starch and a thermoplastic polymer by extrusion or injection moulding.

EP-A-536679 discloses a starch-containing composition which is subjected to extrusion. The composition contains at least one plasticiser compound which is preferably a polyol. The examples in this reference use sorbitol alone as the plasticiser. GB-A-1,353,659 describes the production of amylose films which have certain improved physical properties. The composition used to make these films contains, as plasticiser, hydrogenated oligosaccharide having a maltitol content greater than 50%, optionally together with another plasticiser. The use of a combination of maltitol and sorbitol is specifically exemplified. DE-A-2552126 describes the casting of films from a starch-containing composition which contains one or more polyol plasticisers. Heat-sealable edible films comprising a film layer containing a water-soluble polysaccharide and a polyhydric alcohol are disclosed in EP-A-400484.

More recently the proposal has been made to make biodegradable articles from starch that has been subjected to a heat/pressure treatment which is said to destructure the starch molecule to produce a form of starch which , when moulded, is alleged to give articles of improved form stability and minimum dimensional deviation. European patent 118 240 for instance describes and claims a process for making a molecular dispersion of starch in water by (a) maintaining a composition of starch and water (5-30% water based on the weight of the composition) under controlled conditions of temperature and pressure, (b) heating the composition under elevated pressure to a temperature above its glass transition temperature and melting point while maintaining the water content, thereby to form a melt and (c) further heating and plasticising the melt to dissolve the starch in the water into an essentially molecularly dispersed form, the temperature during the process being in the range of 80° to 240°C. EP 118 240 also contains a description of the injection moulding of the molecularly dispersed starch particularly to produce capsules.

Subsequent patent applications filed after EP 118 240 disclose various modifications and developments of the process and product described in EP 118 240 namely:-

EP 282 451 A - In this patent application the starch composition, containing 10 to 25% water based on the composition is heated in the presence of a chain scission catalyst, such as an acid or alkali, in a closed volume to an elevated temperature and the heating continued until the average molar mass of the material is reduced by a factor of 2 to 5000 compared with its original mass average molar mass. This process modification is said to reduce the incidence of surface defects and to improve the extensibility of the products produced by the process of EP 118 240.

EP 298 920 A - The process described in this patent is applicable particularly to potato starch and involves a pretreatment of the starch to remove free electrolytes and metallic cations associated with phosphate groups of the starch and optionally replacing the cations with specified metallic monovalent and/or polyvalent cations. The starch so produced, with a water content of 10 to 25% by weight based on starch and water, is then used in the process of EP 118 240. This process modification is also said to reduce the incidence of surface defects and to improve the extensibilty of the moulded products.

EP 304 401 A - Whereas the molecularly dispersed starch in water composition of EP 118 240 is extruded in molten form as soon as it is produced, the process of EP 304 401 A first allows the composition to solidify and then remelts it for injection moulding. The process of EP 118 240 is said to be made more stable by operating in this manner and the moulded products to have greater physical strength.

EP 326 517 A - The process feature disclosed in this patent application is to heat the starch and water composition (containing 5 to 40% by weight water based on the weight of the composition) until it has undergone all endothermic transitions including the final narrow endothermic transition just prior to the endothermic change characteristic of oxidative and thermal degradation of the starch. By adopting this feature the process of EP 118 240 is said to be more stable and the products produced to have greater physical strength.

EP 391 853 A - Potato starch is particularly the subject of this patent application because it is obligatory for the starch used to have bound phosphate groups. The relative concentrations of the cations and protons bound to the phosphate groups are regarded as critical and are specified as lying within certain limits. The advantages of the adopting the process feature described and claimed in EP 391 853 are said to be a reduction in surface defects in the articles produced and an improved extensibilty.

The five patent applications described above employ the descriptive term "destructured starch" instead of the expression "molecularly dispersed starch in water" used in EP 118 240.

In addition to EP 118 240 and the associated five patent applications which relate principally to the production of destructured starch there are thirteen patent applications which are concerned with compositions comprising destructured starch and a synthetic thermoplastic polymeric material. EP 327 505 A contains the general disclosure of such compositions while the following twelve patent applications are directed at combinations of destructured starch with specific thermoplastic polymers. The applications are EP 404 723 A, 404 727 A, 404 728 A, 407 350 A, 408 501 A, 408 502 A, 408 503 A, 409 781 A, 409 782 A, 409 783 A, 409 788 A and 409 789 A.

All of the patent publications referred to above whether concerned with destructured starch or combinations of destructured starch with synthetic thermoplastic polymeric materials describe the addition of other substances to the basic starch and water composition which is used in the production of the destructured starch. Particular additional components include :-

"Extenders" are essentially hydrophilic polymeric materials which are water-soluble or water-swellable. Examples include gelatin, proteins, water-soluble polysaccharides such as gums, pectin and cellulose derivatives and various water soluble synthetic polymers.

"Inorganic Fillers" such as oxides of magnesium, silicon, titanium etc.

"Plasticisers" which include low molecular weight poly(alkylene oxides) glycerol, glyceryl monoacetate, propylene glycol and sorbitol, and higher molecular weight products such as polyvinyl alcohol, amylose and xanthan gums.

"Colouring Agents" eg. azo dyes, natural pigments or inorganic pigments.

"Flow-lmprovers" Examples of these additives are animal and vegetable fats preferably in their hydrogenated form, alone or together with mono- and/or di-glycerides or phosphatides especially lecithin.

The present invention is particularly concerned with the nature of the plasticiser which is added to the basic starch composition. The function of the plasticiser is to facilitate the processing of the starch and to produce a product which, when moulded into shape, is mechanically strong without being brittle. The presence of water has a plasticising effect but, as indicated above, it is common practice to add another plasticiser because of the volatility of water. We have now found that particularly useful and advantageous plasticisers comprise certain combinations of sugar alcohols derived from mono- and di- saccharides.

Sugar alcohols such as sorbitol, mannitol, maltitol and lactitol have been individually proposed as plasticisers in extruded starch-containing compositions in EP 497 706 A as have products containing at least one of these sugar alcohols notably hydrogenated starch hydrolysates. The Examples of the patent however are limited to the use of a combination of sorbitol and urea.

Accordingly, the present invention provides a process for the extrusion of a starch-containing composition to produce a material suitable for the production of moulded articles is characterised by the presence in the composition of water in an amount of from 5 to 10% by weight of the composition and a plasticiser which comprises a mixture of 70 to 90% by weight of the mixture of sorbitol, 1 to 10% by weight of the mixture of mannitol and 5 to 20% by weight of the mixture of maltitol.

In addition to the sorbitol, mannitol and maltitol, the plasticiser may contain one or more of other sugar alcohols of mono- and disaccharides, e.g., erythritol, xylitol and lactitol.

The starch which may be used in the process of the invention may be a tuber or grain starch and may by modified e.g., by esterification, etherification, oxidation or dextrinisation. Preferably however the starch is native potato starch, tapioca starch, wheat starch or corn (maize) starch or their waxy equivalents. If desired, mixtures of starches may be used e.g., a mixture of corn starch and waxy corn starch or a mixture of native corn starch and oxidised corn starch.

The starch-containing compositions according to the invention may also include a starch degradation product as described in our copending UK patent application number 9224557. The starch degradation product may be chosen from starch hydrolysis products having DES of 1 to 40, oxidised starches and pyrodextrins, and is preferably a maltodextrin having a DE of 2 to 20. The amount of the starch degradation product present in the composition is preferably 0.5 to 50% by weight, more preferably 1 to 30% (This percentage and all other percentages expressed in this specification and claims are, unless indicated to the contrary, by weight based on the total weight of the starch-containing composition).

The starch-containing composition also includes water in an amount of 5 to 10% (unless indicated to the contrary, water concentrations in this specification and claims refer to added water and do not include any water contained in the starch components).

The process is further facilitated if the composition contains an emulsifier. Many commercially available emulsifiers are suitable for this purpose but glyceryl esters of long chain fatty acids, e.g., glyceryl monostearate, are particularly effective, suitably in an amount of 1 to 5%.

A preferred composition for use in the process of the invention comprises starch and, optionally, a emulsifier in addition to the water and the plasticiser mixture. Particularly preferred is a composition which contains corn starch, 10 to 30% of a mixture comprising 70 to 90 weight % of the mixture sorbitol, 1 to 10 weight % of the mixture mannitol and 5 to 20 weight % of the mixture maltitol, 5 to 10% water and up to 5% of an emulsifier, particularly glyceryl monostearate.

The compositions used in the process of the invention may also include other components according to need for example, inorganic fillers such as titanium dioxide, colouring matter, a mould release agent such as magnesium stearate, a cross-linking agent for the starch e.g., ethylene di-methylol urea to improve the wet-resistance of a subsequently moulded product and/or a blowing agent e.g., a carbonate and/or talc to ensure homogeneous expansion of the composition in a subsequent moulding process.

The conditions under with the extrusion process is conducted are, in general, those which have previously been described in the relevant literature, including the patent publications discussed above. The choice of the extruder is important because the extruder design influences the pressure and shearing effect imposed on the contents of the extruder. We have found that the extruder which was used to obtain the results given in the Examples later in this specification to be particularly suitable for use in the process of the invention i.e., a Werner and Pfleiderer ZSK 40. The temperature of the extruder barrel is preferably 20 to 170°C more preferably 80 to 160°C and the pressure measured immediately before the extruder exit is preferably 10 x 10⁵ to 100 x 10⁵ Pa particularly 20 x 10⁵ to 70 x 10⁵ Pa. The components of the composition may be premixed before being fed to the extruder or some may be premixed and the others added separately, final mixing taking place in the extruder barrel.

It is preferred that product leaving the extruder has a total water content (ie added water plus water contained in the starch components) of 2 to 15% and to this end water may be withdrawn from the product, if necessary, by reducing the pressure and providing a means for water withdrawal immediately before the product leaves the extruder.

The product leaving the extruder is suitably cut into pellets, eg. by a continuously rotating knife, cooled and stored preparatory to moulding in, for example, an injection moulding or compression moulding apparatus. Articles may be moulded from the product of the process of the invention as such but the product may be combined with a thermoplastic, polymeric material especially a synthetic, thermoplastic, polymeric material eg. polyethylene. If desired, the extruder may form part of an injection moulding machine and in this case the starch material is not separated but is directly injection moulded.

The effect of the plasticiser combinations in the compositions according to the invention is to facilitate the fluent running of the injection moulding machine, and to produce a moulded article which is not sticky and which has better mechanical properties and dimensional stability.

The invention will now be further described and illustrated by reference to the following Examples.

### Examples

The extruder used was an intermeshing, co-rotating, twin screw extruder (Werner and Pfleiderer ZSK 40, with L/D of 28) the barrel surrounding the screw having eight consecutive zones each zone having a controlled temperature as follows :-

| | | | | | | | | |
|---|---|---|---|---|---|---|---|---|
| Zone | 1 | 2 | 3 | 4 | 5 | 6 | 7 | 8 |
| Temperature °C | 20 | 110 | 150 | 150 | 150 | 150 | 110 | 90 |

Means for introducing test material was located in zone 2, zone 1 serving as a temperature buffer to prevent the material being introduced at zone 2 becoming overheated. Zones 3, 4, 5 and 6 were heating zones in which the material under test was heated while being plasticised and moved along the extruder barrel under influence of the twin screws. Zone 7 was a moisture-control zone provided with exit means from which water could be removed by reducing the pressure. The final cooling zone 8 was followed by a die having six holes each hole being of 4.0 mm diameter. The pressure in the heating zones was about 60x10⁵ Pa and in the moisture control zone about 40 x 10⁵ Pa. The feed rate to the extruder was 30 kg/hour, the screw rotation speed 200 rpm and the residence time of test material in the extruder about 2 minutes.

### Examples

A variety of compositions were extruded in the equipment described above. The compositions were all based on maize (corn) starch and all contained 2% glyceryl monostearate and 21% plasticiser (excluding water). The water content of the composition and the nature of the plasticiser were varied and some compositions contained a starch degradation product (maltodextrin DE 5)

The properties of the extruded product which are regarded as significant are, tensile strength at break, E-modulus and elongation at break. The tensile strength and E-modulus are indicative of the strength of the moulded product and elongation at break of its elasticity.

The make-up of the compositions examined and the results obtained are shown in the following table.

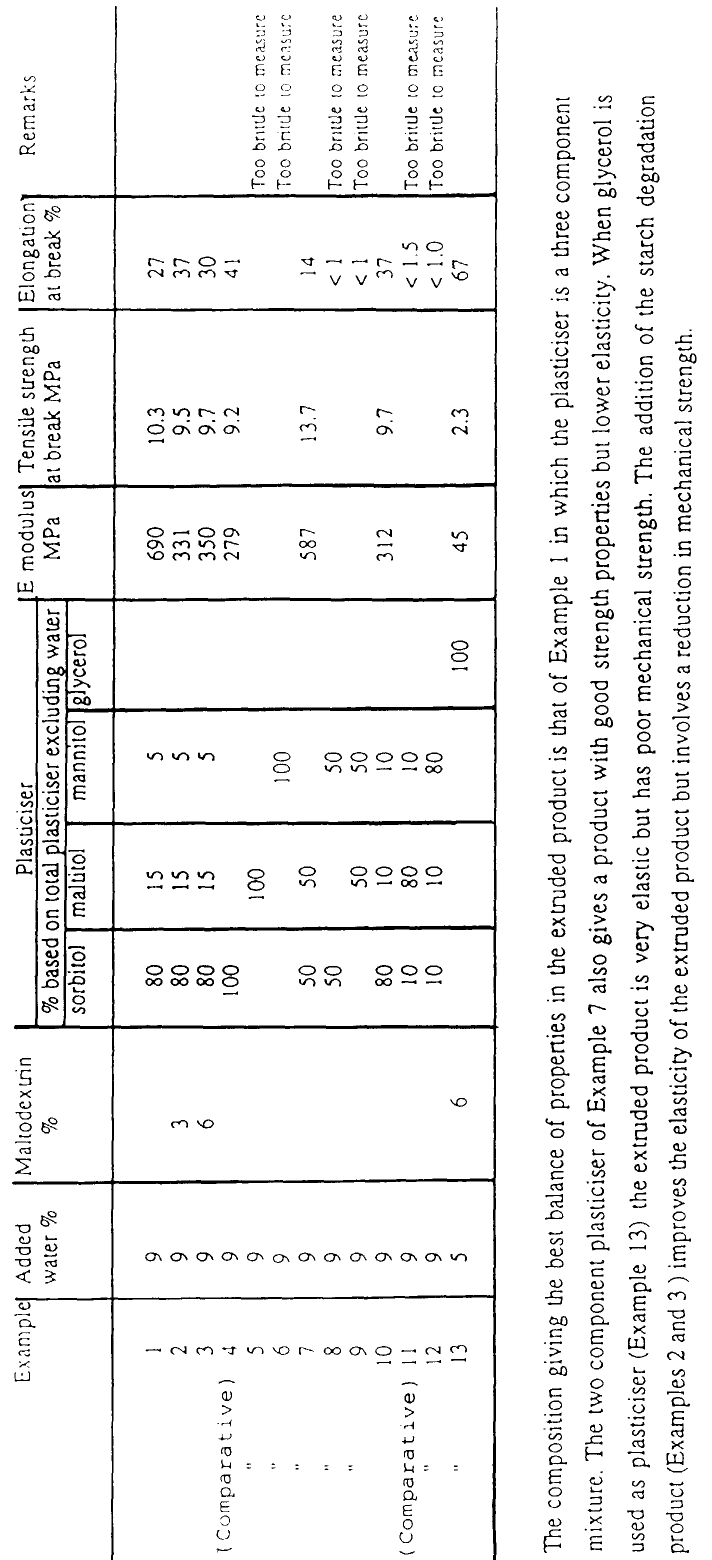

## Claims

1. A process for the extrusion of a starch-containing composition to produce a material suitable for the production of moulded articles is characterised by the presence in the composition of water in an amount of from 5 to 10% by weight of the composition and a plasticiser which comprises a mixture of 70 to 90% by weight of the mixture of sorbitol, 1 to 10% by weight of the mixture of mannitol and 5 to 20% by weight of the mixture of maltitol.

2. A process according to claim 1, characterised in that the starch-containing composition is corn (maize) starch, potato starch, tapioca starch or wheat starch.

3. A process according to either claim 1 or claim 2, characterised in that the composition comprises a starch degradation product selected from the group consisting of starch hydrolysis products having DES 1 to 40, oxidised starches and pyrodextrins.

4. A process according to any one of the preceding claims characterised in that the composition comprises an emulsifier e.g., glyceryl monostearate, preferably in an amount of 1 to 5%.

5. A process according to any one of the preceding claims characterised in that the plasticiser comprises 10 to 30% by weight of the total starch-containing composition.

6. A process according to any one of the preceding claims wherein the plasticiser additionally comprises one or more sugar alcohols selected from erythritol, xylitol and lactitol.

## Patentansprüche

1. Verfahren zur Extrusion einer stärkeenthaltenden Zusammensetzung zur Herstellung eines zur Herstellung von Formgegenständen geeigneten Materials, gekennzeichnet durch die Gegenwart von Wasser in einer Menge von 5 bis 10 Gew.-% der Zusammensetzung und von einem Weichmacher, das ein Gemisch aus 70 bis 90 Gew.-% des Gemisches Sorbit, 1 bis 10 Gew.-% des Gemisches Mannit und 5 bis 20 Gew.-% des Gemisches Maltit umfaßt, in der Zusammensetzung.

2. Verfahren nach Anspruch 1, dadurch gekennzeichnet, daß die stärkeenthaltende Zusammensetzung Maisstärke, Kartoffelstärke, Tapiokastärke oder Weizenstärke ist.

3. Verfahren nach entweder Anspruch 1 oder Anspruch 2, dadurch gekennzeichnet. daß die Zusammensetzung ein Stärkeabbauprodukt, ausgewählt aus der Gruppe, bestehend aus Stärkehydrolyseprodukten mit DES 1 bis 40, oxidierten Stärken und Pyrodextrinen, umfaßt.

4. Verfahren nach einem der vorangehenden Ansprüche, dadurch gekennzeichnet, daß die Zusammensetzung einen Emulgator, beispielsweise Glycerylmonostearat, vorzugsweise in einer Menge von 1 bis 5 %, umfaßt.

5. verfahren nach einem der vorangehenden Ansprüche, dadurch gekennzeichnet, daß der Weichmacher 10 bis 30 Gew.-% der gesamten stärkeenthaltenden Zusammensetzung umfaßt.

6. Verfahren nach einem der vorangehenden Ansprüche, wobei der Weichmacher zusätzlich einen oder mehrere Zuckeralkohole, ausgewählt aus Erythrit, Xylit und Lactit, umfaßt.

## Revendications

1. Procédé d'extrusion d'une composition contenant de l'amidon pour produire un matériau convenant pour la production d'articles moulés, caractérisé par la présence, dans la composition, d'eau en une quantité de 5 à 10% en poids de la composition et d'un plastifiant qui comprend un mélange de 70 à 90 %, en poids du mélange, de sorbitol, de 1 à 10%, en poids du mélange, de mannitol et de 5 à 20%, en poids du mélange, de maltitol.

2. Procédé suivant la revendication 1, caractérisé en ce que la composition contenant de l'amidon est de l'amidon de mals, de la fécule de pomme de terre, de la fécule de manioc ou de l'amidon de froment.

3. Procédé suivant la revendication 1 ou la revendication 2, caractérisé en ce que la composition comprend un produit de dégradation de l'amidon choisi dans le groupe consistant en produits d'hydrolyse de l'amidon ayant des ED de 1 à 40, amidons oxydés et pyrodextrincs.

4. Procédé suivant l'une quelconque des revendications précédentes, caractérisé en ce que la composition comprend un émulsionnant, par exemple du monostéarate de glycéryle, de préférence en quantité de 1 à 5%.

5. Procédé suivant l'une quelconque des revendications précédentes, caractérisé en ce que le plastifiant constitue 10 à 30% en poids de la composition totale contenant de l'amidon.

6. Procédé suivant l'une quelconque des revendications précédentes, dans lequel le plastifiant comprend en outre un ou plusieurs alcools-sucres choisis entre l'érythritol, le xylitol et le lactitol.
